# EUROPÄISCHE PATENTSCHRIFT

(11) **EP 1 560 011 B1**
(45) Veröffentlichungstag und Bekanntmachung des Hinweises auf die Patenterteilung: **17.03.2010**
(21) Anmeldenummer: 04075199.2
(22) Anmeldetag: 27.01.2004
(51) Int. Cl.: G01L 1/22, G01G 3/14

(54) **Dehnmessstreifen mit Feuchtigkeitsschutz durch inhomogene anorganische Schicht auf glättender Polymerschicht (ORMOCER) und Schlitzanordnung**
Strain gauge with moisture protection by an inhomogeneous inorganic layer upon a smoothing polymer layer (ORMOCER) and an arrangement of slits
Jauge de contrainte avec protection contre l'humidité au moyen d'une couche inorganique inhomogène sur une couche polymère d'égalisation (ORMOCER) et un arrangement de fentes

(43) Veröffentlichungstag der Anmeldung: 03.08.2005
(73) Patentinhaber: Mettler-Toledo AG, 8606 Greifensee (CH)
(72) Erfinder: Ziebart, Volker, 8418 Schlatt (CH); Tellenbach, Jean-Maurice, 8442 Hettlingen (CH)

(56) Entgegenhaltungen:
- EP-A- 1 384 980
- EP-A- 1 686 356
- WO-A-2004/011892
- JP-A- 1 212 327
- JP-A- 60 227 140

## Beschreibung

Die Erfindung betrifft einen Dehnmessstreifen, welcher eine dehnungsempfindliche auf einem Träger aufgebrachte elektrische Widerstandsbahn und Anschlusselektroden zur Kontaktierung der Widerstandsbahn aufweist, wobei der Dehnmessstreifen mit einer aus anorganischen Materialien bestehenden Schutzschicht versehen ist, sowie eine Reihen- oder Flächenanordnung von Dehnmessstreifen, versehen mit einer dehnungsempfindlichen auf einem Träger aufgebrachten elektrischen Widerstandsbahn, mit einer die Widerstandsbahn und mindestens einen Teil des Trägers bedeckenden aus anorganischen Materialien bestehenden Schutzschicht. Ferner betrifft die Erfindung eine Kraftmesszelle mit einem Verformungskörper und mit mindestens einem auf dem Verformungskörper aufgebrachten Dehnmessstreifen sowie ein Verfahren zur Herstellung einer Schutzschicht auf einem Dehnmessstreifen, oder einer Reihen- oder Flächenanordnung von Dehnmessstreifen, beziehungsweise auf einer mit einem Dehnmessstreifen versehenen Kraftmesszelle.

Ein Dehnmessstreifen weist eine auf einem Träger aufgebrachte metallische Widerstandsbahn auf, welche vorzugsweise in Form einer Mäanderstruktur mittels bekanntem Ätzverfahren hergestellt wird. Ferner sind auf dem Träger Anschlusselektroden zur Kontaktierung der Widerstandsbahn vorhanden, wobei diese häufig in einem Arbeitsgang mit der Widerstandsbahn entstehen und somit meist aus demselben Material bestehen. Als Trägermaterial für Dehnmessstreifen werden elektrische Isolatoren verwendet; je nach Anwendungsbereich findet man Glas, Keramik, häufig auch Polymere, glasfaserverstärkte Polymere oder Kompositmaterialien. Dehnmessstreifen sind Messelemente, bei welchen eine mechanische Verformung eine Änderung des elektrischen Widerstandes hervorruft, und welche daher zur Messung der die Verformung bewirkenden Kraft benutzt werden.

In der Wägetechnologie, beispielsweise, werden Dehnmessstreifen zur Wandlung einer durch eine Kraft auf einen Verformungskörper bewirkten Verformung in ein elektrisches Signal verwendet. In einer solchen Kraftmesszelle entsteht eine Auslenkung des vertikal beweglichen Lastaufnehmers gegenüber dem räumlich feststehenden Teil des Verformungskörpers durch die Kraftwirkung einer Last auf den Lastaufnehmer, beispielsweise in der Wägetechnologie auf der mit dem Lastaufnehmer verbundenen Waagschale. In einer bevorzugten Ausbildungsform weisen solche Verformungskörper vier durch dünne Materialbereiche geformte, elastische Biegestellen auf, welche jeweils an den vier Eckpunkten eines Parallelogramms angeordnet sind, wobei der Lastaufnehmer als vertikal beweglicher Parallelogrammschenkel gegenüber einem vorzugsweise an einem Gehäuse befestigten, ebenfalls vertikalen Parallelogrammschenkel angeordnet ist. Die Grösse der in den dünnen Biegestellen hervorgerufenen Verformung wird mit mindestens einem auf einer der Biegestellen, meist mittels einer elektrisch isolierenden Klebeschicht aufgebrachten Dehnmessstreifen als Änderung seines elektrischen Widerstands gemessen.

Aufgrund ihrer elastischen Eigenschaften werden in der Wägetechnologie bevorzugt polymere Trägermaterialien, insbesondere Polyimide, aber auch Epoxide, Phenolharze, Melamine und Ketone für Dehnmessstreifen verwendet. Polymere Träger haben den Vorteil, dass sie sich aufgrund ihrer geringeren Steifigkeit dem Verformungskörper besser anpassen. Insbesondere wird dadurch die mechanische Belastung der Klebeschicht reduziert. Hystereseeffekte oder eine Zerstörung der einen starren Träger mit einem Verformungskörper verbindenden Klebeschicht treten hier weitaus weniger auf. Zusätzlich ermöglichen polymere Trägermaterialien bei Dehnmessstreifen mit einer mäanderförmig ausgebildeten Widerstandsbahn bekanntermassen eine Lastdriftkompensation durch eine entsprechende Ausbildung der Umkehrstellen der Widerstandsbahn. Im Übrigen sind Dehnmessstreifen mit polymeren Trägern besser handhabbar und preisgünstiger herzustellen.

Polymere besitzen jedoch den Nachteil, dass sie eine relativ hohe Aufnahmefähigkeit für Wasser, aber auch für Lösungsmittel aufweisen, so dass der Feuchtigkeitsgehalt der eine Kraftmesszelle umgebenden Luft, insbesondere aber dessen Änderung, einen nachhaltigen Einfluss auf das Messresultat hat. Beispielsweise sind die Empfindlichkeit, die Stabilität des Nullpunkts und das Kriechverhalten, die sogenannte Lastdrift, von der Feuchtigkeit - betreffend Wasser und Lösungsmitteln - beeinflusste Parameter einer mit Dehnmessstreifen als Wandler beaufschlagten Kraftmesszelle.

Für die Grössenordnung der durch eine Änderung dieser Parameter verursachten Änderungen des Wägeresultats wurden einige zehn bis einige hundert parts-permillion (ppm) des Vollausschlages (Signal bei Volllast) im Falle einer stufenförmigen Änderung des Feuchtigkeitsgehalts der eine Kraftmesszelle umgebenden Luft von ca. 30% relativer Feuchtigkeit (rF) auf 85% rF im typischen Temperaturbereich zwischen 10°C und 40°C gemessen.

Einige dieser zu Änderungen der Messresultate führenden Ursachen sind erkannt und physikalisch erklärbar. Zum Ersten nimmt das Trägermaterial eines ungeschützten Dehnmessstreifens die Feuchtigkeit auf und quillt dadurch auf, so dass sich der Abstand der Widerstandsbahn zur Biegestelle vergrössert und dadurch die von der sich verformenden Biegestelle in die Widerstandsbahn induzierte Verformung geringfügig verändert wird. Zum Zweiten ändert aufgenommene Feuchtigkeit die elastischen Eigenschaften des Trägermaterials und damit die Verformungsparameter der Widerstandsbahn. Zum Dritten kann eine erhöhte Feuchtigkeit des Trägermaterials Leckströme zwischen benachbarten Bereichen einer mäanderförmigen Widerstandsbahn, oder gar zwischen der Widerstandsbahn und dem metallischen Verformungskörper hervorrufen. Diese Effekte sind zwar relativ zum Vollausschlag klein, wie oben genannte Messwerte zeigen, jedoch für eine Kraftmesszelle, die höchsten Genauigkeitsanforderungen zu genügen hat, ist ihr Einfluss auf das Messsignal noch zu gross. Daher sind Schutzvorrichtungen und/oder Schutzmassnahmen erforderlich, um ein von Umgebungseinflüssen, insbesondere von auf das Trägermaterial und/oder die Widerstandsbahn einwirkender Feuchtigkeit, weitgehend unbeeinflusstes Messsignal zu erhalten.

Im Stand der Technik sind solche Massnahmen zum Schutz von Dehnmessstreifen vor eine Veränderung des Messsignals bewirkender Feuchtigkeit bekannt. So beschreibt die DE 27 28 916 A1 die Bedeckung eines auf einem Messgrössenaufnehmer aufgebrachten Dehnmessstreifens. Zunächst wird eine elektrisch isolierende Schicht, beispielsweise ein Harz aufgebracht, beziehungsweise der Dehnmessstreifen wird in diese Schicht eingebettet, so dass auch ein Teil des Aufnehmerkörpers um den Dehnmessstreifen abgedeckt wird. Auf die elektrisch isolierende Schicht wird eine Metallschicht angeordnet, die ebenfalls einen Teil des Aufnehmerkörpers um den Dehnmessstreifen abdeckt. Somit kann eine Kapselung gegen Feuchtigkeit für einen bereits auf einem Aufnehmer aufgebrachten Dehnmessstreifen erreicht werden.

Aus der US 5 631 622 ist eine Schutzmassnahme gegen Feuchtigkeit für Dehnmessstreifen bekannt, bei der anschliessend an deren Herstellung in einer Flächenanordnung, noch vor der Vereinzelung der Dehnmessstreifen, zunächst eine elektrisch isolierende Polymerschicht auf die Dehnmessstreifen aufgebracht wird und darauf eine Metallfolie als zusätzliche Abdeckung laminiert wird. Auch nach der Vereinzelung ist ein Dehnmessstreifen grossflächig durch die Metallfolie gegen Feuchtigkeitseinwirkung geschützt.

Um einen Dehnmessstreifen vor Korrosion zu schützen und die Messeigenschaften zu verbessern, wird in der JP 7 113 697 A vorgeschlagen, dass zur Verhinderung des Eindringens von Feuchtigkeit ein dünner anorganischer Film, beispielsweise SiO₂ mit einer Dicke von etwa 100 Nanometern (nm), sozusagen als Feuchtigkeitsbarriereschicht auf die Oberfläche des Dehnmessstreifens aufgebracht wird. Anschliessend wird ein organischer Isolationsfilm, beispielsweise Polyimid mit einer Dicke von etwa 10 Mikrometern (µm) aufgebracht, wodurch mikroskopisch kleine Löcher oder Risse im anorganischen Film, sogenannte Pinholes, durch welche weiterhin Feuchtigkeit eindringen könnte, verstopft werden. Die durch diese zweilagige Schicht erzeugte Schutzwirkung ist nicht immer befriedigend, insbesondere bei den für relativ niedrige Lasten ausgelegten, hochempfindlichen Kraftmesszellen.

Die DE 40 15 666 C2 offenbart einen mit Dehnmessstreifen beaufschlagten Kraftaufnehmer, wobei ein Dehnmessstreifen und der daran angrenzende Teil des Trägers mit einer aufgedampften diffusionsdichten elektrisch isolierenden Beschichtung aus Siliziumoxid oder Siliziumkarbid versehen wird, deren Schichtdicke vorzugsweise zwei bis vier Mikrometer beträgt. In einer anderen Ausführungsform kann die Beschichtung auch aus einer unteren Siliziumoxidschicht und einer darüber befindlichen Metallschicht, vorzugsweise einer Nickelschicht, bestehen.

Die Problematik bei den oben genannten Lösungen besteht darin, dass die den Dehnmessstreifen insgesamt bedeckenden Schutzschichten oder -folien, insbesondere die anorganischen Schichten oder Folien mit hoher Barrierewirkung, sei es, dass diese direkt auf den am Messgrössenaufnehmer applizierten Dehnmessstreifen, oder dass diese auf eine grossflächige Anordnung einer Vielzahl von Dehnmessstreifen anschliessend an deren Herstellung aufgebracht werden, aufgrund ihrer vergleichsweise grossen Masse und hohen Steifigkeit ebenfalls das mit dem Dehnmessstreifen ermittelte Messresultat verändern. Diese Messfehler entstehen durch einen sogenannten Kraftnebenschluss, verursacht durch die Bedeckung des Dehnmessstreifens mit einer relativ dicken Schicht oder Folie in der Grössenordnung von einigen Mikrometern, wie sie der Stand der Technik offenbart. Insbesondere Metallschichten oder -folien, jedoch auch Schichten aus anorganischen Isolatormaterialien tragen aufgrund ihrer vergleichsweise hohen Steifigkeit bereits ab einer Dicke von wenigen Mikrometern (µm) zu einem messbaren Kraftnebenschluss bei. Ein solcher Kraftnebenschluss entsteht beispielsweise dadurch, dass dicke anorganische Schutzschichten wegen ihrer hohen Steifigkeit signifikant zur Gesamtsteifigkeit der eingangs genannten Biegestellen des Verformungskörpers beitragen. Im Falle von Kraftmesszellen zum Messen kleiner Kräfte ist dies besonders problematisch, da hier die Biegestellen zum Erzielen einer hohen Empfindlichkeit nur eine geringe Dicke aufweisen. Das heisst unerwünschte Veränderungen der elastischen Eigenschaften der Schutzschicht, wie zum Beispiel anelastische Nachwirkung, hohe Inelastizität, insbesondere Dehnungshysterese, führen zu einem nicht reproduzierbaren und damit auch softwaretechnisch nicht kompensierbaren Messfehler.

Andererseits ist es natürlich erforderlich, Durchgangsbereiche für die Feuchtigkeit, die bevorzugt in sehr dünnen Feuchtigkeitsbarriereschichten entstehen können, die sogenannten Pinholes - Mikroporen oder Mikrorisse -, wie sie die JP 7 113 697 A beschreibt, in einer solchen Barriereschicht weitestgehend zu vermeiden oder zumindest deren Einfluss zu verringern.

Die EP 1 384 980 A1, die Stand der Technik gemäss Artikel 54(3) EPÜ darstellt, offenbart einen Dehnmessstreifen mit einer dehnungsempfindlichen auf einem Träger aufgebrachten elektrischen Widerstandsbahn und Anschlusselektroden zur Kontaktierung der Widerstandsbahn, wobei der Dehnmessstreifen mit einer mindestens einen Teil des Trägers und/oder der Widerstandsbahn und/oder der Anschlusselektroden bedeckenden, anorganische Materialien aufweisenden Schutzschicht versehen ist. Die Schutzschicht ist eine Mehrlagenschicht und zwischen dem Dehnmessstreifen und der Schutzschicht ist eine ausebnende Polymerschicht vorhanden, welche die Oberfläche des zu beschichtenden Bereichs hinsichtlich Rauhigkeiten glättet, wobei deren Schichtdicke mindestens der Dicke der Schutzschicht entspricht.

Es ist die Aufgabe der vorliegenden Erfindung, für einen Dehnmessstreifen, insbesondere einen auf einen Verformungskörper einer Kraftmesszelle aufgebrachten oder aufbringbaren Dehnmessstreifen, eine Schutzschicht vorzuschlagen, welche einerseits das Eindringen von Feuchtigkeit verhindert, andererseits einen Kraftnebenschluss vermeidet oder zumindest erheblich verringert.

Diese Aufgabe wird mit den Merkmalen der unabhängigen Ansprüche gelöst.

Ein Dehnmessstreifen mit einer dehnungsempfindlichen auf einem Träger aufgebrachten elektrischen Widerstandsbahn und Anschlusselektroden zur Kontaktierung der Widerstandsbahn ist mit einer mindestens einen Teil des Trägers und/oder der Widerstandsbahn und/oder der Anschlusselektroden bedeckenden aus anorganischen Materialien bestehenden Schutzschicht versehen. Die Schutzschicht ist in ihrem Aufbau inhomogen über ihre Dicke und zwischen dem Dehnmessstreifen und der Schutzschicht ist eine ausebnende Schicht, die aus einem Polymer oder aus einem anorganisch-organischen Hybridpolymer besteht, angeordnet, welche die Oberfläche des zu beschichtenden Bereichs hinsichtlich Rauhigkeiten glättet. Die Schichtdicke der ausebnenden Schicht entspricht mindestens der Dicke der Schutzschicht. Die Schutzschicht ist in Form einer Mehrlagenschicht aufgebaut, die in abwechselnder Folge verschiedene anorganische Materialien aufweist, und/oder die in abwechselnder Folge verschiedene stöchiometrische Zusammensetzungen eines aus mindestens zwei Komponenten bestehenden anorganischen Materials aufweist und/oder die in abwechselnder Folge variierende strukturelle Parameter eines anorganischen Materials aufweist.

Die Erfindung nutzt die ausgezeichneten Barriereeigenschaften, welche die anorganischen Materialien aufweisen, aus und reduziert durch die Verwendung sehr dünner Schutzschichten die sehr hohe Steifigkeit von aus dem Stand der Technik bekannten dicken anorganischen Schichten. Zur Vermeidung des oben erwähnten Kraftnebenschlusses, ist es erforderlich die Dicke der Schutzschicht vorwiegend im Submikrometerbereich zu wählen, da die anorganischen Materialien bekanntermassen über Werte für den Elastizitätsmodul verfügen, die um einen Faktor 10 bis 100 grösser sind, als diejenigen von Polymermaterialien, wie sie beispielsweise für den Träger verwendet werden. Infolgedessen kann die Steifigkeit der Schutzschicht, in welche bekanntermassen der Elastizitätsmodul eines Materials und die Dicke einer Schicht aus diesem Material eingehen, verringert werden.

Diese Beschränkung der Dicke ist nicht im selben Mass für die der Schutzschicht unterlegte ausebnende Schicht, welche aus einem elektrisch nicht leitenden Polymer, insbesondere einem Acrylat-Polymer oder einem anorganisch-organischen Hybridpolymer besteht, erforderlich (Letztere Materialien sind in der DE 38 28 098 A1 und DE 43 03 570 A1 beschrieben). Ihre Funktion besteht im ausebnen von Rauhigkeiten der Oberfläche des Trägers und der Widerstandsbahn und im abrunden der Kanten der Widerstandsbahn beziehungsweise dem reduzieren von deren Flankensteilheit. Da die elastisch weichen Polymerschichten weniger zu einem Kraftnebenschluss beitragen, als dies für eine anorganische Schutzschicht derselben Dicke der Fall wäre, kann diese Schicht problemlos dicker gewählt werden, als die Schutzschicht. Aus Gründen einer ökonomischen Verwendung von Materialien ist die Dicke der ausebnenden Schicht jedoch auf ein Mass zu beschränken, welches dem Erreichen einer gewünschten Ebenheit entspricht. Je nach verwendetem Polymermaterial ist der ausebnende Effekt jedoch bei verschiedenen Schichtdicken erhältlich. Eine Schichtdicke zwischen einem und drei Mikrometern zeigt in der Regel befriedigende Ergebnisse, in besonderen Fällen kann sie im Submikrometerbereich liegen. Letztlich ist die Dicke der ausebnenden Schicht auch abhängig von der darauf aufzubringenden Schutzschicht, die insbesondere für Dehnmessstreifen, die in hochempfindlichen Lastzellen für einen niederen Lastbereich Verwendung finden sollen, insgesamt im Submikrometerbereich liegen sollte.

Neben dem Glätten der Unterlage, insbesondere auch hinsichtlich Rauhigkeiten der Oberfläche des Dehnmessstreifens hat sich diese ausebnende Schicht, das heisst die Polymerschicht oder die anorganisch-organische Hybridpolymerschicht in Versuchen als haftvermittelnd in Bezug auf nachfolgende Schichten erwiesen, so dass keine Delamination der Schutzschicht auftritt. Ferner ist die ausebnende Schicht, beispielsweise eine Schicht aus einem anorganisch-organischen Hybridpolymer, einfach applizierbar ist, zum Beispiel durch Streichen, Walzen, Sprühen oder mittels Tampondruckverfahren, was im übrigen auch für eine Acrylat-Polymerschicht zutrifft.

Vorzugsweise ist die ausebnende Schicht als Funktion ihrer Dicke homogen hinsichtlich ihrer Zusammensetzung.

Eine besondere Eigenschaft der Schutzschicht, insbesondere einzelner Lagen derselben ist, dass sie beim Aufbringen, insbesondere mittels PECVD, konformal auf ihrer Unterlage aufwächst. Dies bedeutet, dass sie im Wesentlichen eine Bedeckung konstanter Dicke aufweist, unabhängig vom Winkel, den ihre Unterlage lokal zur Ausrichtung der Beschichtungsfläche als Ganzes (Beschichtungsebene) einnimmt. Das heisst auch überhängende Bereiche oder zur Beschichtungsebene im Wesentlichen orthogonal verlaufende Bereiche einer zu beschichtenden Unterlage, beispielsweise die Seitenflanken der Widerstandsbahn, werden von der Schutzschicht bedeckt. In der Kombination mit der der Schutzschicht unterlegten ausebnenden Schicht ergibt sich eine optimierte Schutzwirkung gegenüber eindringender Feuchtigkeit. Kanten, an welchen in einer anorganischen Schutzschicht oben erwähnte Mikroporen oder Mikrorisse, beziehungsweise Haarrisse durch lokale Spannungen, insbesondere thermische Spannungen, bevorzugt entstehen und die andererseits auch als Haftstellen für diese Mikroporen und Haarrisse wirken, werden durch die der Schutzschicht unterlegte Schicht abgerundet und raue Oberflächen ausgeglichen. Somit wird das Vorhandensein von Mikroporen oder Mikrorissen in der Schutzschicht von vorne herein reduziert, jedoch sind durch die Konformalität der Schutzschicht die Kanten trotz einer noch vorhandenen Steilheit von einer Bedeckung durch die Schutzschicht nicht ausgeschlossen. Die Fläche des Dehnmessstreifens wird also vollständig und gleichmässig von der Schutzschicht bedeckt, ohne dass Schwachstellen für eindringende Feuchtigkeit vorhanden wären. Diese Tatsache ist neben der erwähnten vollständigen Bedeckung der Kanten der Widerstandsbahn vor allem auch in den Fällen von Vorteil, in denen der Dehnmessstreifen auf einer Kraftmesszelle appliziert und anschliessend beschichtet wird, oder in einer Einzel- oder Flächenanordnung von Dehnmessstreifen, bei welcher bereits durch Schlitze die Ränder des Trägers im Wesentlichen freigelegt sind, um bei der Beschichtung bedeckt zu werden.

Eine Zunahme der Dicke einer anorganischen Schutzschicht resultiert nicht zwangsläufig in einer Zunahme der Barrierewirkung gegenüber eindringender Feuchtigkeit, welche im Zusammenhang mit der Erfindung allgemein als Wirkung gegenüber dem Eindringen von Wasser, jedoch auch Lösungsmitteln und/oder Gasen verstanden werden soll. Einmal offene Mikroporen oder Mikrorisse setzen sich bevorzugt über die gesamte Dicke einer vorwiegend homogenen anorganischen Schicht fort.

Daher ist es nutzbringend und sinnvoll die Schutzschicht inhomogen auszugestalten. Durch geeignete Wahl der inhomogen in der Schicht zu kombinierenden Materialien und vor allem durch geeignete Änderung der Beschichtungsparameter können diese offenen Kanäle in Form von Mikroporen oder Mikrorissen geschlossen werden.

In besonderer Weise kann die Schutzschicht eine Abfolge von Siliziumoxid- und Siliziumnitrid-Lagen aufweisen. Solche Schutzschichten offenbart die WO03/050894 für die Bedeckung elektronischer Vorrichtungen, insbesondere von Anzeigevorrichtungen, wie Licht emittierende Vorrichtungen oder Flüssigkristallanzeigen.

In einer anderen bevorzugten Ausführungsform weist die Schutzschicht eine kontinuierliche Veränderung eines oder mehrerer Parameter, insbesondere der chemischen Zusammensetzung über ihre Dicke auf. Diese kontinuierliche Veränderung kann für Mehrlagenschichten in der Art und Weise erfolgen, dass die Übergänge zwischen den einzelnen Lagen weich ist, das heisst , dass sich die Schichtparameter nicht abrupt ändern, sondern ihr Profil periodisch ist, das heisst eher einer Sinusfunktion gleicht

Bei der Herstellung von Schichten mit mindestens einem kontinuierlich variierenden Parameter, ändert beispielsweise während des Aufbringens die Quelle ihre Materialzusammensetzung, beziehungsweise für die Schicht wird aus zwei Quellen mit sich jeweils ändernder Rate - einmal zunehmend als Funktion der Zeit und einmal abnehmend als Funktion der Zeit - Material abgeschieden.

Ein Vorteil einer inhomogenen Schutzschicht mit kontinuierlicher Veränderung eines oder mehrerer Parameter, das heisst einer Mehrlagenschicht mit kontinuierlichen Übergängen zwischen den Lagen, ist eine weitere Verringerung von inneren Spannungen, wie sie bei sich durch stark unterschiedliche Parameter zwischen abrupt aufeinander folgenden Lagen in einer Mehrlagenschicht entstehen könnte, wodurch in Einzelfällen eine Delamination einzelner Lagen einer Mehrlagenschicht nicht in jedem Fall ausgeschlossen wäre.

Demzufolge liegt der Vorteil einer Schutzschicht mit kontinuierlicher Variation eines Parameters in einer Verminderung der Delaminationsgefahr. Der Vorteil einer Mehrlagenschicht mit abrupten Übergängen zwischen den Lagen liegt hingegen darin, dass durch die von den Schichtparametern einer ersten Lage, beispielsweise einer Barrierelage, abweichenden Parameter einer unmittelbar folgenden zweiten Lage, zum Beispiel einer Zwischenlage, die Mikroporen und Mikrorisse in der ersten Lage nahezu vollständig bedeckt werden und somit eine verbesserte Barrierewirkung erzielt wird.

Es sei an dieser Stelle darauf hingewiesen, dass die anorganischen Schutzschichten, bei relativ niederen Temperaturen, etwa zwischen 80 und 130°C bevorzugt mittels chemischer Dampfabscheidung, beispielsweise PECVD (plasma enhanced chemical vapour deposition) aufgebracht werden, da das Trägermaterial des Dehnmessstreifens sowie die ausebnende Schicht möglichst wenig beeinträchtigt werden sollen. Infolgedessen weicht die Struktur dieser Schutzschichten oft von einer strengen Kristallinität ab und sie wächst insbesondere im Falle anorganischer Isolatormaterialien überwiegend amorph auf.

In Verwendung eines erfindungsgemässen Dehnmessstreifens weist eine Kraftmesszelle mit einem Verformungskörper mindestens einen auf dem Verformungskörper aufgebrachten Dehnmessstreifen auf, auf welchem eine dehnungsempfindliche auf einem Träger aufgebrachte elektrische Widerstandsbahn vorhanden ist. Zum Schutz gegen eindringende Feuchtigkeit erstrecken sich ein Teil der Schutzschicht und der dieser unterlegten ausebnenden Schicht, die aus einem Polymer oder aus einem anorganisch-organischen Hybridpolymer besteht, über den mindestens einen Dehnmessstreifen hinaus und bedecken mindestens einen Teil des Verformungskörpers, insbesondere die an den Dehnmessstreifen angrenzenden Bereiche des Verformungskörpers. Die Schutzschicht ist in ihrem Aufbau inhomogen über ihre Dicke. Die ausebnende Schicht besteht insbesondere aus einem Acrylat-Polymer oder einem anorganisch-organischen Hybridpolymer. Die Schichtdicke dieser ausebnenden Schicht entspricht mindestens der Dicke der inhomogenen anorganischen Schutzschicht. Die Schutzschicht ist in Form einer Mehrlagenschicht aufgebaut, die in abwechselnder Folge verschiedene anorganische Materialien aufweist, und/oder die in abwechselnder Folge verschiedene stöchiometrische Zusammensetzungen eines aus mindestens zwei Komponenten bestehenden anorganischen Materials aufweist und/oder die in abwechselnder Folge variierende strukturelle Parameter eines anorganischen Materials aufweist.

Auf einen Dehnmessstreifen mit einer erfindungsgemässen inhomogenen anorganischen Schutzschicht, welcher eine ausebnende Schicht unterlegt ist, wird in vorteilhafter Ausgestaltung eine Abdeckschicht aus Polymermaterial oder aus Silikon auf die anorganische Schutzschicht aufgebracht. Silikon ist unproblematisch im Hinblick auf den oben diskutierten Kraftnebenschluss, da es besonders weich ist.

In einem erfindungsgemässen Verfahren zur Erzeugung einer Schutzschicht auf einem einzelnen Dehnmessstreifen oder einer Reihen- oder Flächenanordnung von Dehnmessstreifen wird eine ausebnende Schicht, die aus einem Polymer oder aus einem anorganisch-organischen Hybridpolymer besteht, auf mindestens einen Teil des Trägers und/oder der Widerstandsbahn und/oder der Anschlusselektroden aufgebracht und auf der ausebnenden Schicht eine dünne anorganische Schutzschicht abgeschieden, wobei die Beschichtungsparameter derart variiert werden, dass sich eine über ihre Dicke inhomogene anorganische Schutzschicht mit verschiedenen anorganischen Materialien in abwechselnder Folge und/oder mit verschiedenen stöchiometrischen Zusammensetzungen eines aus mindestens zwei Komponenten bestehenden anorganischen Materials in abwechselnde Folge und/oder mit variierenden strukturellen Parameter eines anorganischen Materials in abwechselnder Folge ausbildet.

Eine bevorzugte Methode zum Aufbringen der ausebnenden Schicht ist das Tampondruckverfahren. Für die Herstellung der Schutzschicht wird in vorteilhafter Weise die Methode der chemical vapour deposition (CVD), insbesondere der plasma enhanced chemical vapour deposition (PECVD) angewandt.

In einer besonders bevorzugten Ausgestaltung des Verfahrens wird die Oberfläche der Dehnmessstreifen und/oder der ausebnenden Schicht vor der Beschichtung mittels chemischer oder physikalischer Reinigungsverfahren, insbesondere mittels Plasmareinigungsverfahren, vorbehandelt.

In einem Verfahren zur Erzeugung einer Schutzschicht auf einer einen mit mindestens einem Dehnmessstreifen versehenen Verformungskörper aufweisenden Kraftmesszelle, wird eine ausebnende Schicht, die aus einem Polymer oder aus einem anorganisch-organischen Hybridpolymer besteht, auf mindestens einen Teil des Trägers und/oder der Widerstandsbahn und den Verformungskörper aufgebracht und auf der ausebnenden Schicht wird eine dünne anorganische Schutzschicht abgeschieden, wobei die Beschichtungsparameter derart variiert werden, dass sich eine über ihre Dicke inhomogene anorganische Schutzschicht ausbildet.

Eine solche Beschichtung eines Dehnmessstreifens kann bevorzugt an dem bereits auf der Kraftmesszelle applizierten Dehnmessstreifen mittels oben erwähnter Methoden erfolgen.

In der folgenden Beschreibung ist die Erfindung anhand von Ausführungsbeispielen unter Bezugnahme auf die stark schematisierten Zeichnungen näher erläutert. Es zeigen:
- Figur 1: einen einzelnen Dehnmessstreifen mit einer aufgebrachten Schutzschicht in Form einer Mehrlagenschicht und mit einer dieser unterlegten ausebnenden Schicht in dreidimensionaler Darstellung,
- Figur 2: einen einzelnen Dehnmessstreifen mit einer aufgebrachten Schutzschicht in Form einer Mehrlagenschicht und mit einer dieser unterlegten ausebnenden Schicht im Schnitt,
- Figur 3: eine Reihenanordnung von Dehnmessstreifen mit Schlitzen im Trägermaterial zwischen benachbarten Dehnmessstreifen,
- Figur 4: eine Flächenanordnung von Dehnmessstreifen mit Schlitzen im Trägermaterial zwischen benachbarten Dehnmessstreifen.
- Figur 5: einen Verformungskörper einer Wägezelle mit auf den jeweiligen die Biegelager bildenden Bereichen geringer Materialstärke angebrachten Dehnmessstreifen in dreidimensionaler Darstellung,
- Figur 6: eine vergrösserte, dreidimensionale Darstellung des vom Kreis A in der Figur 5 umschlossenen Bereichs des Verformungskörpers mit einem darauf angebrachten Dehnmessstreifen, der mit einer Mehrlagenschicht versehen ist.

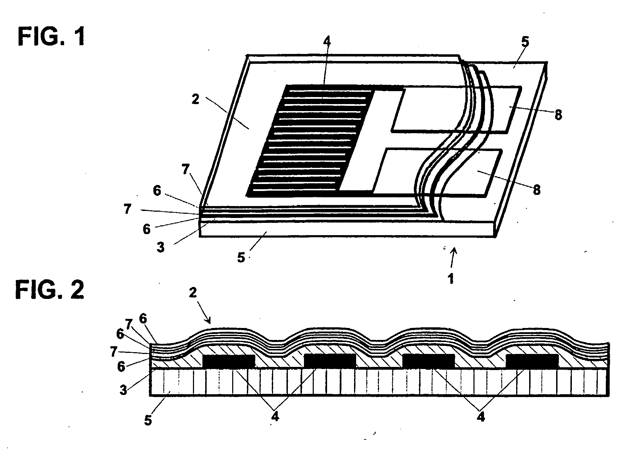

Figur 1 zeigt in dreidimensionaler Darstellung einen einzelnen Dehnmessstreifen 1, der mit einer Schutzschicht gegen das Eindringen von Feuchtigkeit, insbesondere hinsichtlich Wasser- und Lösungsmitteldämpfen, aber auch Gasen, wie Sauerstoff, in Form einer Mehrlagenschicht 2 versehen ist. Der Dehnmessstreifen 1 weist eine dehnungsabhängige Widerstandsbahn 4, die vorzugsweise mäanderförmig auf einem Träger 5 angeordnet ist und mit Anschlusselektroden 8 verbunden ist, auf. Der Dehnmessstreifen 1 wurde beispielsweise aus einer Flächenanordnung nach seiner Beschichtung ausgeschnitten. Der Übersicht halber ist hier die Mehrlagenschicht 2, die aus einer regulären Abfolge von Lagen 6, 7 besteht, durchsichtig und gebrochen gezeichnet. Die Lagen 6, 7 der mehrlagigen Schutzschicht 2 weisen verschiedene anorganische Materialien auf, oder besitzen eine unterschiedliche stöchiometrische Zusammensetzung eines aus mindestens zwei Komponenten bestehenden anorganischen Materials, oder weisen in abwechselnder Folge variierende strukturelle Parameter eines anorganischen Materials auf. Die Dicke der einzelnen Lagen 6, 7 liegt bei typischerweise 5 bis 200 nm, abhängig vom Beschichtungsverfahren, in Einzelfällen, besonders im Falle einer Anwendung des Dehnmessstreifens 1 für höherlastige Kraftmesszellen oder bei Verwendung eines Materials mit niedrigem Elastizitätsmodul kann sie auch bis zu 500 nm betragen.

Der Mehrlagenschicht ist eine ausebnende Schicht 3 aus einem Polymer, beispielsweise eine Acrylat- oder Methacrylat-Polymerschicht, unterlegt. Eine solche Schicht 3 glättet die Oberfläche des Dehnmessstreifens 1, insbesondere im Bereich der Kanten, beispielsweise an denjenigen der Widerstandsbahn 4, wodurch deren Flankensteilheit reduziert wird. Ausserdem werden Unregelmässigkeiten der Oberfläche oder gar Fehlstellen oder Schmutzpartikel, sei dies nun auf der Widerstandsbahn 4 oder dem Träger 5 in ausgleichender Weise abgedeckt. Insbesondere wird durch die ausebnende Polymerschicht 3 die Wahrscheinlichkeit des Entstehens oder Anheftens von Mikroporen oder Haarrissen in einer darauf aufgebrachten anorganischen Schutzschicht 2 reduziert. Auf diese Weise wird die Ausbildung einer gut abdichtenden auf die ausebnende Schicht 3 aufzubringende bzw. aufgebrachte mehrlagigen anorganischen Schutzschicht 2 begünstigt.

Weitere Materialien, die als ausebnende Polymerschicht 3 Verwendung finden können, sind anorganisch-organische Hybridpolymere, beispielsweise mit dem Handelsnamen "ORMOCER". Diese Materialien, welche in der DE 38 28 098 A1 und DE 43 03 570 A1 beschrieben sind, besitzen eine gute Elastizität und sogar eine gewisse Barrierewirkung gegenüber eindringender Feuchtigkeit. Allerdings ist die Barrierewirkung nicht hoch genug, als dass sie sich für eine Verwendung als Schutzschicht für Dehnmessstreifen, insbesondere für solche, die für eine Verwendung in einer Kraftmessvorrichtung vorgesehen sind, eignen würde. Ein besonderer Vorteil dieser anorganisch-organischen Hybridpolymere ist, dass diese Materialien an Luft abgeschieden werden können, beispielsweise mittels Sprüh-, Schleuder- oder Tampondruckverfahren.

Um einerseits eine genügend grosse ausgleichende und glättende Wirkung zu erhalten und andererseits, um einen, wenn auch geringfügig zu jenem beitragenden, Kraftnebenschluss weitgehend zu vermeiden, ist es vorteilhaft, die ausebnende Polymerschicht 3 in einer Schichtdicke von etwa ein bis drei Mikrometer aufzubringen, wobei die Schichtdicke letzten Endes von der ausgleichenden Wirkung des verwendeten Materials abhängt und daher in Einzelfällen auch im Submikrometerbereich liegen kann. Die Dicke der ausebnenden Polymerschicht 3 wird jedoch zum Erzielen einer genügend hohen ausgleichenden Wirkung mindestens der Gesamtdicke der Schutzschicht 2 entsprechen. Vorzugsweise ist die ausebnende Polymerschicht 3 als Funktion ihrer Dicke homogen hinsichtlich ihrer Zusammensetzung.

Bei den Lagen 6, 7 der mehrlagigen Schutzschicht 2, wenn sie aus verschiedenen anorganischen Materialien bestehen, handelt es sich vorzugsweise um anorganische Isolatoren, beispielsweise um eine Abfolge von dünnen Lagen aus Siliziumnitrid und Siliziumoxid, wobei die Abfolge von 100 bis 200 nm Siliziumnitrid (erste Lage 6) - 100 nm Siliziumoxid (zweite Lage 7) - 100 nm Siliziumnitrid (wieder erste Lage 6) - 100 nm, gegebenenfalls Siliziumoxid (wieder zweite Lage 7) - gegebenenfalls 100 nm Siliziumnitrid (wieder erste Lage 6) eine bevorzugte Anordnung darstellt, da vor allem das Siliziumnitrid als Barriereschicht gegenüber eindringender Feuchtigkeit eine hohe Wirksamkeit aufweist. Die Siliziumoxid-Lagen, wenngleich auch diesem Material eine Barrierewirkung zugeschrieben werden kann, dienen in der Mehrlagenschicht vorwiegend dazu, mögliche Mikroporen oder Haarrisse in der Siliziumnitrid-Lage zu verschliessen. Eine Mehrlagenschicht 2 besteht aus mindestens drei Lagen anorganischer Materialien, vorzugsweise jedoch aus fünf Lagen.

Die Lagen 6, 7 der mehrlagigen Schutzschicht 2 können auch aus einem aus mindestens zwei Komponenten bestehenden anorganischen Material zusammengesetzt sein, wobei sich deren stöchiometrische Zusammensetzung von Lage zu Lage ändert. Als Beispiel für Materialien, die sich für die Herstellung von mehrlagigen Schutzschichten 2 mit einer abwechselnden Folge von Lagen 6, 7 unterschiedlicher stöchiometrischer Zusammensetzung eignen, seien Siliziumoxinitride genannt, wobei der Oxid- beziehungsweise der Nitrid-Gehalt von Lage zu Lage variiert.

Der Aufbau und die bevorzugte Abfolge der Einzellagen in der Mehrlagenschicht 2 kommt in der Figur 2 zum Ausdruck, welche einen Schnitt durch einen Dehnmessstreifen 1 mit einer insgesamt fünf dünne Einzellagen 6, 7 aufweisenden aufgebrachten Mehrlagenschicht 2 zeigt. Allerdings ist die Zeichnung stark schematisiert und es sind die jeweilige Dicke des Trägers 5, der Widerstandsbahn 4, der ausebnenden Polymerschicht 3, welche zwischen der mehrlagigen Schutzschicht 2 und dem Dehnmessstreifen 1 angeordnet ist, und der einzelnen Lagen 6, 7 der Schutzschicht hier nicht massstabgetreu gezeichnet.

Eine Mehrlagenschicht 2 kann aus einer regelmässigen Abfolge einzelner Lagen 6, 7, welche beispielsweise hinsichtlich ihrer Dicke jeweils gleich sind, bestehen. Bevorzugt ist eine reguläre Abfolge von Lagen aus Siliziumnitrid im Wechsel mit Lagen aus Siliziumoxid, wobei die Dicke der einzelnen Lagen etwa 100 nm beträgt und die Gesamtdicke der Mehrlagenschicht in der Regel einen Mikrometer nicht übersteigt.

Auf ähnliche Weise kann auch eine Schutzschicht 2 mit sich kontinuierlich ändernden strukturellen Parametern hergestellt werden, da häufig eine strukturelle Anpassung mit einer sich ändernden Zusammensetzung einhergeht. Eine weitere Möglichkeit strukturelle Parameter, beispielsweise der Körnigkeit von polykristallinen Schichten, sofern sie nicht amorph aufwachsen, als Funktion der Schichtdicke zu variieren besteht in einer Änderung von Beschichtungsparametern, sei dies die Temperatur der Quelle, des Substrats oder der Beschichtungskammer als Ganzes oder sei dies die Beschichtungsrate.

Es kann von Nutzen sein, auf eine mehrlagige Schutzschicht 2 noch eine Abdeckschicht (hier nicht gezeigt) aufzubringen, welche eine mögliche mechanische Beanspruchung der Schutzschicht 2, beispielsweise in Form von Kratzern, verhindert und gleichzeitig die Schutzschicht 2 stabilisiert. Als Material für eine solche Abdeckschicht hat sich Silikon als geeignet erwiesen. Die Silikonschicht kann problemlos in einer Dicke von einigen Mikrometern aufgebracht werden, da das Material sehr weich ist und insofern nicht zu einem Kraftnebenschluss beiträgt.

Als Materialien für die Schutzschichten 2 sind eine Vielzahl der bekannten, in verschiedenen Beschichtungsverfahren aufbringbaren anorganischen Isolatoren verwendbar. Als Beispiele seien hier Oxide, Nitride, Fluoride, Karbide, Boride oder Kombinationen davon, insbesondere Oxinitride, oder auch Mischkeramiken genannt. Zum Beispiel haben sich Siliziumoxid, Titanoxid, Chromoxid, Aluminiumoxid, Siliziumnitrid und Titannitrid als Material bewährt. Auch die sogenannten "diamond-like carbon"-Schichten können als mögliche Schutzschichten 2 Verwendung finden. Mit besonderem Vorteil können Siliziumnitridschichten mit ihrer ausgezeichneten Barrierewirkung im Wechsel mit Oxidschichten, insbesondere Siliziumoxid, Titanoxid, Tantaloxid, Zirkonoxid, Hafniumoxid, Aluminiumoxid, oder Fluoridlagen, beispielsweise Titanfluorid oder Mischungen aus den betreffenden Materialien für die anorganischen Schutzschichten Verwendung finden.

Als weitere Materialien für die Schutzschichten 2 kommen insbesondere auch Metalle, beispielsweise Silber, Aluminium, Gold, Chrom, Kupfer, Nickel, Titan, sowie Legierungen, beispielsweise Nickel-Kobalt-Legierungen, oder intermetallische Verbindungen, zum Beispiel aus Aluminium und Kupfer, aus Wolfram und Kupfer oder aus Titan und Aluminium in Frage. Allerdings sind Metallschichten als Schutzschichten wegen der aufwändigeren Beschichtungsverfahren weniger bevorzugt. Insbesondere kann hier die Gefahr eines möglichen Kurzschlusses zur Widerstandsbahn nicht vollständig ausgeschlossen werden.

Die erfindungsgemässe Beschichtung von Dehnmessstreifen 1 mit einer anorganischen Schutzschicht, zum Beispiel in Form einer Mehrlagenschicht 2 kann im Anschluss an die Herstellung der Dehnmessstreifen 1 erfolgen, solange diese noch in einer Reihen- oder Flächenanordnung vorliegen. Bei einer Vereinzelung der Dehnmessstreifen 1 bleiben normalerweise die Seitenflächen, insbesondere der Trägerfolie, offen und eindringender Feuchtigkeit zugänglich. Aufgrund der Flächenverhältnisse von Oberseite und Seitenflächen eines Dehnmessstreifens 1 ist jedoch die Schutzwirkung der anorganischen Schutzschicht 2 immer noch recht hoch. Für den Fall erhöhter Anforderungen an einen Dehnmessstreifen 1, z.B. wenn er für eine Verwendung in hochempfindlichen Kraftmesszellen vorgesehen ist, ist es selbstverständlich auch möglich einen einzelnen Dehnmessstreifen 1, gegebenenfalls rundum, zu beschichten, wodurch die Seitenflächen des Trägers 5, zumindest bei vorsichtiger Handhabung, abgedeckt wären.

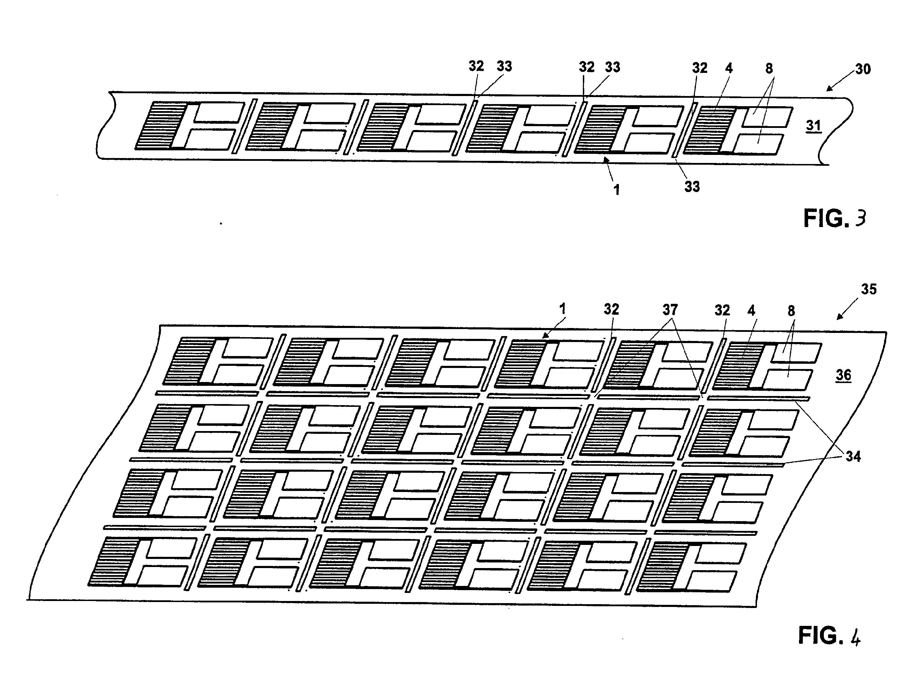

Eine Möglichkeit, die Seitenflächen von Dehnmessstreifen 1 in einer Reihen- oder Flächenanordnung mit einer ausebnenden Schicht 3 und einer anorganischen Schutzschicht 2 zumindest zu einem grossen Teil, zu bedecken, soll anhand der Figuren 3 und 4 beschrieben werden. Die Figur 3 zeigt eine Reihenanordnung 30 von Dehnmessstreifen 1. Zwischen den einzelnen mit ihren jeweiligen Anschlusselektroden 8 verbundenen Widerstandsbahnen 4 ist der Träger 31 der Reihenanordnung 30 durch schmale, quer zur Längsausdehnung der Reihenanordnung 30 orientierte Schlitze 32 durchbrochen, wobei die Schlitze 32 nicht über die gesamte Breite des Trägers 31 der Reihenanordnung 30 reichen. Die Schlitze 32 können nach dem Aufbringen der Widerstandsbahn 4 und der Anschlusselektroden 8 durch verschiedene Verfahren, wie Wasserschneiden, Laserschneiden oder in bevorzugter Weise auch durch Stanzen im Träger 31 erzeugt werden. Dies erfolgt vor dem Bedecken der Reihenanordnung 30 mit der anorganischen Schutzschicht 2. Auf diese Weise sind die Seitenflächen eines Dehnmessstreifens 1 bis auf die noch während des Beschichtens vorhandenen möglichst klein dimensionierten Verbindungsstellen 33 des Trägers 31, welche bei der anschliessenden Vereinzelung der Dehnmessstreifen 1 durchtrennt werden, ebenfalls mit einer Schutzschicht 2 versehen.

Die Figur 4 zeigt eine Flächenanordnung 35 von Dehnmessstreifen 1, in welcher in den Bereichen zwischen den einzelnen mit ihren jeweiligen Anschlusselektroden 8 verbundenen Widerstandsbahnen 4 Schlitze 32 und senkrecht dazu angeordnete Schlitze 34 den Träger 36 der Flächenanordnung 35 durchbrechen, so dass diese lediglich an jeweils vier Verbindungsstellen 37 um jeden Dehnmessstreifen 1 verbunden ist. Die Schlitze 32, 34 werden an jenen Stellen eines Trägers 5 erzeugt, an welchen bei einer späteren Vereinzelung der Dehnmessstreifen 1 diese aus der Flächenanordnung 35 herausgetrennt werden. Eine solche Schlitzanordnung kann jedoch in vielfältiger Weise variiert werden, beispielsweise derart dass die Schlitze einen rechten Winkel bildend um die mit ihren jeweiligen Anschlusselektroden 8 verbundenen Widerstandsbahnen 4 teilweise herum reichen und nur noch an zwei oder drei Verbindungsstellen des Trägers 36 miteinander verknüpft sind. Selbstverständlich können die Dehnmessstreifen 1 untereinander auch an mehr als vier Verbindungsstellen miteinander verknüpft sein.

Wichtig ist es, die Verknüpfung des Trägers 31, 36 an den Verbindungsstellen 33, 37 zu minimieren, das heisst die Fläche der Verbindungsstellen 33, 37 so gering zu halten, dass einerseits die Seitenflächen eines Dehnmessstreifens 1 in einem möglichst grossen Bereich von der Schutzschicht 2 bedeckt werden können, andererseits aber für die Handhabung der Reihenanordnung 30 oder der Flächenanordnung 35 von Dehnmessstreifen 1 noch ein genügend hoher Zusammenhalt des Trägers 31, 36 vorhanden ist. Es hat sich gezeigt, dass auf diese Weise das Eindringen von Feuchtigkeit gegenüber Dehnmessstreifen aus einer Reihen oder Flächenanordnung des Standes der Technik stark verringert und die Empfindlichkeit einer mit solchen Dehnmessstreifen 1 beaufschlagte Kraftmesszelle nachhaltig verbessert werden konnte.

Die Breite eines Schlitzes 32, 34 ist so zu wählen, dass einerseits nicht zu viel Trägermaterial zwischen den einzelnen Dehnmessstreifen 1 verloren geht und andererseits die aufzubringenden Beschichtungsmaterialien eine genügende Bedeckung der Seitenkanten eines Dehnmessstreifens 1 gewährleisten. Eine Breite von etwa 0,5 mm sei hier als Orientierungswert genannt.

Der Träger 5 beziehungsweise die Widerstandsbahn 4 eines Dehnmessstreifens 1, insbesondere solange dieser in einer Reihen- oder Flächenanordnung vorhanden ist, wird bevorzugt vor dem Beschichtungsvorgang, das heisst dem Aufbringen der ausebnenden Schicht 3 einem Reinigungsprozess, bei welchem die Oberfläche mittels chemischer oder physikalischer Reinigungsverfahren, insbesondere mittels eines Plasmareinigungsverfahrens vorbehandelt wird, unterzogen. Ebenso kann nach dem Aufbringen der ausebnenden Schicht 3 ein solches Reinigungsverfahren auf diese angewandt werden, bevor die anorganische Schutzschicht 2 aufgebracht wird.

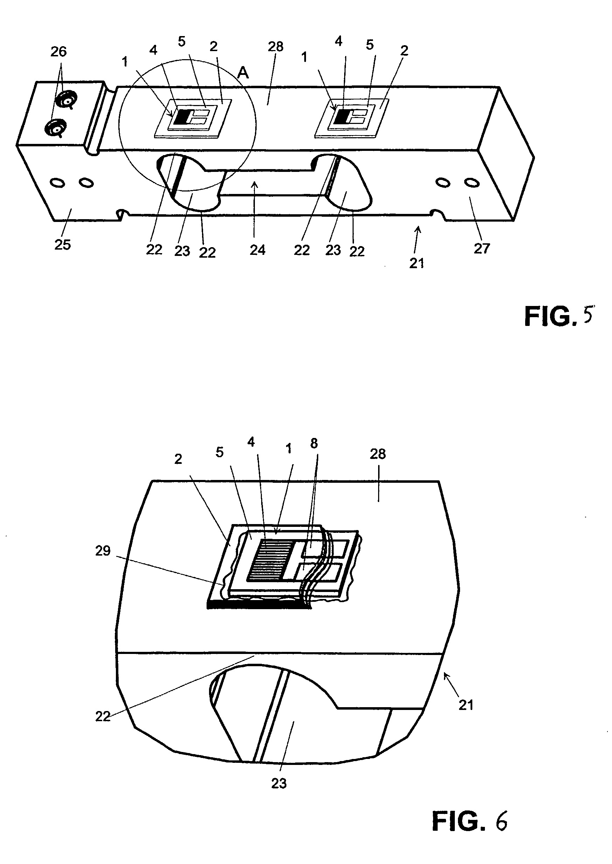

Die Figur 5 zeigt den Verformungskörper 21 einer Kraftmesszelle mit vier an den Eckpunkten eines Parallelogramms angeordneten elastischen Biegestellen 22. Diese werden durch bogenförmig erweiterte Randbereiche 23 einer Ausnehmung 24 im Zentrum des einstückigen Verformungskörpers 21 gebildet. Der links in der Figur dargestellte Lastaufnehmer 25 des Verformungskörpers 21 ist in vertikaler Richtung beweglich. Liegt beispielsweise bei Anwendung der Kraftmesszelle in der Wägetechnologie auf einer hier nicht sichtbaren Waagschale - die im Übrigen mittels mehrerer Schrauben in den Gewinden 26 am Lastaufnehmer 25 befestigbar ist - eine Last auf, so lenkt der Lastaufnehmer 25 unter Verformung der Biegestellen 22 vertikal nach unten gegenüber einem rechts in der Figur dargestellten feststehenden Teil 27 des Verformungskörpers 21 aus. Zur Messung dieser Verformung sind an den Biegestellen 22 auf der Oberseite 28 des Verformungskörpers 21 Dehnmessstreifen 1 mit einer dehnungsabhängigen Widerstandsbahn 4, die vorzugsweise mäanderförmig auf einem Träger 5 angeordnet ist, aufgeklebt. Bevorzugt werden nicht nur an den der Oberseite 28 des Verformungskörpers 21 zugewandten Biegestellen 22 Dehnmessstreifen 1 angeordnet, sondern auch an denjenigen an der Unterseite des Verformungskörpers 21, welche in der Zeichnung nicht sichtbar sind. Die Dehnmessstreifen 1 sind mit einer Schutzschicht 2 zum Schutz gegen eindringende Feuchtigkeit, das heisst Wasser, Lösungsmittel oder Gase, versehen, deren Aufbau, Herstellung und Funktionsweise oben anhand der Figuren 1 und 2 erläutert wurde. Um den jeweiligen Dehnmessstreifen 1 zu erkennen, ist die Schutzschicht 2 und die ihr unterlegte ausebnende Polymerschicht 3 hier durchsichtig gezeichnet. Es besteht allerdings keine Notwendigkeit dafür, dass die Schichten 2, 3 in ihrer realen Ausführung transparent für Licht sind.

In der Ausführungsform, wie sie die Figur 5 zeigt, ist die Schutzschicht 2, beispielsweise durch ein direktes Aufbringen auf den bereits mit dem Verformungskörper 21 verbundenen Dehnmessstreifen 1 erzeugt worden. Dadurch ist es möglich, den Dehnmessstreifen 1 gesamthaft, das heisst dessen Träger 5 und die Widerstandsbahn 4 und sogar darüber hinaus noch einen Teil des Verformungskörpers 21 zu bedecken und damit vollständig gegen das Eindringen von Feuchtigkeit abzudichten. Insbesondere wird dabei auch das häufig als Klebematerial verwendete Epoxid-Harz, welches hier zum Aufkleben des Dehnmessstreifens 1 auf den Verformungskörper 21 verwendet wurde, und welches über den Flächenrand des Dehnmessstreifens 1 noch etwas hinaus reicht, abgedeckt (siehe Figur 6). Dies bedeutet, dass feuchtigkeitsbedingte Einflüsse des Klebematerials auf das Wägeergebnis ebenfalls verhindert werden. Ebenso werden Einflüsse, die von möglicherweise über die Ränder und Kanten des Dehnmessstreifens 1 in diesen eindringende Feuchtigkeit durch die vollständige Bedeckung derselben mit der anorganischen Schutzschicht 2 vermieden. Auf diese Weise kann die Änderungsrate der oben beschriebenen, von Änderungen der Feuchtigkeit in der Umgebungsatmosphäre beeinträchtigten Messgrössen einer Kraftmesszelle, nämlich die Empfindlichkeit, die Stabilität des Nullpunkts und das Kriechverhalten, in ihrer Grössenordnung um einen Faktor 10² bis 10⁶ verringert werden. Damit sind die genannten Parameter in den meisten Fällen über die Lebensdauer einer Kraftmesszelle praktisch unabhängig von der sich ändernden Umgebungsfeuchtigkeit.

In der Figur 6 ist der vom Kreis A der Figur 5 umschlossene Bereich des Verformungskörpers 21 vergrössert dargestellt. Es ist wie in der Figur 5 der auf der Biegestelle 22 applizierte Dehnmessstreifen 1 mit einer diesen und einen Teil der Oberseite 28 des Verformungskörpers 21, insbesondere auch die oben erwähnte Klebeschicht 29 bedeckenden mehrlagigen anorganischen Schutzschicht 2 nebst der ausebnenden Polymerschicht 3 zu sehen. Zur Verdeutlichung ist auch hier die anorganische Schutzschicht 2 wieder durchsichtig und auf ihrer in der Figur nach rechts weisenden Seite gebrochen gezeichnet. Ausserdem sind die Anschlusselektroden 8 der mäanderförmigen Widerstandsbahn 4 zu sehen. Diese müssen selbstverständlich auch nach dem Aufbringen einer Schutzschicht 2 für den Anschluss des detektierenden Brückenstromkreises (hier nicht gezeigt) zugänglich sein und es sind entsprechende Massnahmen zu ergreifen.

Da hier die beschriebene Beschichtung eines bereits auf dem Verformungskörper 21 einer Kraftmesszelle applizierten Dehnmessstreifens 1 erfolgt, wird bevorzugt als besonders kostengünstiges Beschichtungsverfahren ein Bedampfen an Luft zur Anwendung kommen. Bei einer solchen, nämlich der als combustion chemical vapor deposition (CCVD) bekannten Beschichtungsmethode wird der Dampf einer vorzugsweise sich in Lösung befindlichen Substanz in einer gasgespeisten Flamme erhitzt, wo sie chemisch reagiert, bevor sie sich auf ein in der Nähe der Flamme befindliches Substrat niederschlägt. Als weitere mögliche Beschichtungsverfahren seien die plasma enhanced chemical vapour deposition (PECVD) oder die plasma induced chemical vapour deposition (PICVD) genannt.

Mittels der Plasmabeschichtungsmethoden lassen sich konformale Schichten erzeugen, da das Plasma Zugang zu sämtlichen zu beschichtenden Oberflächen hat, unabhängig von deren Anordnung in der Beschichtungsanlage. Durch geeignete Wahl der Beschichtungsparameter, insbesondere der Anregungsfrequenz beziehungsweise deren Variation als Funktion der Zeit lassen sich spannungsarme Schutzschichten oder Lagen 6, 7 in einer Mehrlagenschicht 2 erzeugen, was zu einer verminderten Gefahr einer Delamination insbesondere der einzelner Lagen 6, 7 in einer Mehrlagenschicht 2 beiträgt.

Im Folgenden sei beispielhaft auf die Herstellung einer Schutzschicht 2 aus Siliziumoxinitrid näher eingegangen. Nach dem Aufbringen der ausebnenden Schicht 3 aus einem anorganisch-organischen Hybridpolymer mittels Tampondruckverfahren wird der Dehnmessstreifen in eine Anlage zur Beschichtung mittels PECVD eingebracht. Unter den Prozessgasen SiH₄ in N₂ verdünnt und NH₃ wird die Nitridbildung begünstigt. Durch sukzessiv ansteigende Zufuhr von N₂O erfolgt eine Bildung von Siliziumoxidnitrid, wonach die Zufuhr von NH₃ unter weiterem Anstieg der N₂O-Zufuhr gedrosselt wird. Durch Wechsel dieses Vorgangs und anschliessender Wiederholung kann entweder eine Mehrlagenschicht aus Lagen mit weichen Übergängen erzeugt werden, oder durch abruptes Abschalten der NH₃-Zufuhr bei voller N₂O-Zufuhr beziehungsweise umgekehrt ist die Herstellung von Mehrlagenschichten mit nahezu diskontinuierlichen Übergängen möglich.

Die mit einer erfindungsgemässen über ihre Schichtdicke inhomogenen anorganischen Schutzschicht 2 versehenen Dehnmessstreifen 1, welcher eine ausebnende Schicht 3 unterlegt ist, wurde in bevorzugten Ausgestaltungen beschrieben und dargestellt. Anhand der erfindungsgemässen Lehre sind jedoch weitere fachmännische Ausgestaltungen realisierbar.

### Bezugszeichenliste

- 1: Dehnmessstreifen
- 2: Mehrlagenschicht, mehrlagige Schutzschicht
- 3: Ausebnende Polymerschicht
- 4: Widerstandsbahn
- 5: Träger
- 6: Erste Lage der Schutzschicht
- 7: Zweite Lage der Schutzschicht
- 8: Anschlusselektroden
- 21: Verformungskörper
- 22: Biegestelle
- 23: bogenförmig erweiterter Randbereich
- 24: Ausnehmung
- 25: Lastaufnehmer
- 26: Gewinde
- 27: Feststehender Teil
- 28: Oberseite des Verformungskörpers
- 29: Klebeschicht
- 30: Reihenanordnung von Dehnmessstreifen
- 31: Träger der Reihenanordnung
- 32: Schlitz
- 33: Verbindungsstelle
- 34: Schlitz
- 35: Flächenanordnung von Dehnmessstreifen
- 36: Träger der Flächenanordnung
- 37: Verbindungsstelle

## Patentansprüche

1. Dehnmessstreifen (1) mit einer dehnungsempfindlichen auf einem Träger (5) aufgebrachten elektrischen Widerstandsbahn (4) und Anschlusselektroden (8) zur Kontaktierung der Widerstandsbahn (4), wobei der Dehnmessstreifen (1) mit einer mindestens einen Teil des Trägers (5) und/oder der Widerstandsbahn (4) und/oder der Anschlusselektroden (8) bedeckenden aus anorganischen Materialien bestehenden Schutzschicht (2) versehen ist, **dadurch gekennzeichnet, dass** die anorganische Schutzschicht (2) in ihrem Aufbau inhomogen über ihre Dicke ist, und dass zwischen dem Dehnmessstreifen (1) und der Schutzschicht (2) eine ausebnende Schicht (3), die aus einem Polymer oder aus einem anorganisch-organischen Hybridpolymer besteht, vorhanden ist, welche die Oberfläche des zu beschichtenden Bereichs hinsichtlich Rauhigkeiten glättet, wobei deren Schichtdicke mindestens der Dicke der Schutzschicht entspricht, wobei die Schutzschicht in Form einer Mehrlagenschicht (2) aufgebaut ist, die in abwechselnder Folge verschiedene anorganische Materialien aufweist, und/oder die in abwechselnde Folge verschiedene stöchiometrische Zusammensetzungen eines aus mindestens zwei Komponenten bestehenden anorganischen Materials aufweist, und/oder die in abwechselnder Folge variierende strukturelle Parameter eines anorganischen Materials aufweist.

2. Dehnmessstreifen nach Anspruch 1, **dadurch gekennzeichnet, dass** die Schutzschicht (2) konformal auf der ausebnenden Schicht (3) angeordnet ist.

3. Dehnmessstreifen nach Anspruch 1 oder 2, **dadurch gekennzeichnet, dass** die Schutzschicht eine Abfolge von Siliziumnitridlagen und weiteren Lagen aus Oxiden, Carbiden oder Fluoriden oder Mischungen davon aufweist.

4. Dehnmessstreifen nach Anspruch 3, **dadurch gekennzeichnet, dass** die weiteren Lagen aus Titanoxid, Tantaloxid, Zirkonoxid, Hafniumoxid, Aluminiumoxid, Siliziumcarbid oder Titanfluorid, insbesondere aber aus Siliziumoxid bestehen.

5. Dehnmessstreifen nach einem der Ansprüche 1 bis 4, **dadurch gekennzeichnet, dass** die als Mehrlagenschicht ausgebildete Schutzschicht (2) kontinuierliche Übergänge zwischen den Lagen aufweist.

6. Dehnmessstreifen nach einem der Ansprüche 1 bis 5, **dadurch gekennzeichnet, dass** die ausebnende Schicht (3) aus einem Acrylat-Polymer besteht.

7. Dehnmessstreifen nach einem der Ansprüche 1 bis 6, **dadurch gekennzeichnet, dass** eine Abdeckschicht aus Silikon oder Polymermaterial die anorganische Schutzschicht (2) überdeckt.

8. Reihen- oder Flächenanordnung (30, 35) von Dehnmessstreifen (1) nach einem der Ansprüche 1 bis 7, **dadurch gekennzeichnet, dass** der Träger (31, 36) der Reihen- oder Flächenanordnung (30, 35) durch eine Schlitzanordnung durchbrochen ist, wodurch die Seitenflächen des Trägers (31, 36) ebenfalls von der ausebnenden Schicht (3) und der Schutzschicht (2) im Bereich der Schlitze bedeckt sind.

9. Reihen oder Flächenanordnung nach Anspruch 8, **dadurch gekennzeichnet, dass** die Schlitzanordnung aus sich entlang der Seiten eines Dehnmessstreifens (1) erstreckenden Schlitzen (32, 34) besteht, wobei jeder Schlitz (32, 34) sich über nahezu die gesamte entsprechende Seitenlänge eines Dehnmessstreifens (1) erstreckt.

10. Kraftmesszelle mit einem Verformungskörper und mit mindestens einem auf dem Verformungskörper aufgebrachten Dehnmessstreifen (1) nach einem der Ansprüche 1 bis 7, **dadurch gekennzeichnet, dass** ein Teil der Schutzschicht (2) und der dieser unterlegten ausebnenden Schicht (3) sich über den mindestens einen Dehnmessstreifen (1) hinaus erstrecken und mindestens einen Teil des Verformungskörpers (21), insbesondere die an den Dehnmessstreifen (1) angrenzenden Bereiche des Verformungskörpers (21), bedecken.

11. Verfahren zur Erzeugung einer Schutzschicht auf einem einzelnen Dehnmessstreifen (1), oder einer Reihen- oder Flächenanordnung (30, 35) von Dehnmessstreifen (1), nach einem der Ansprüche 1 bis 10, **dadurch gekennzeichnet, dass** eine ausebnende Schicht (3), die aus einem Polymer oder aus einem anorganisch-organischen Hybridpolymer besteht, auf mindestens einen Teil des Trägers (5, 31, 36) und/oder der Widerstandsbahn (4) und/oder der Anschlusselektroden (8) aufgebracht wird, auf der ausebnenden Schicht (3) eine anorganische Schutzschicht (2) abgeschieden wird, wobei die Beschichtungsparameter derart variiert werden, dass sich eine über ihre Dicke inhomogene anorganische Schutzschicht (2) mit verschiedenen anorganischen Materialien in abwechselnder Folge und/oder mit verschiedenen stöchiometrischen Zusammensetzungen eines aus mindestens zwei Komponenten bestehenden anorganischen Materials in abwechselnde Folge und/oder mit variierenden strukturellen Parameter eines anorganischen Materials in abwechselnder Folge ausbildet.

12. Verfahren zur Erzeugung einer Schutzschicht auf einem Dehnmessstreifen nach Anspruch 11, **dadurch gekennzeichnet, dass** der Dehnmessstreifen vor seiner Beschichtung auf den Verformungskörper (21) einer Kraftmesszelle aufgebracht wird und dass die ausebnende Schicht (3), auf mindestens einen Teil des Trägers (5) und/oder der Widerstandsbahn (4) und/oder der Anschlusselektroden (8) und den Verformungskörper (21) aufgebracht wird und auf der ausebnenden Schicht (3) die anorganische Schutzschicht (2) abgeschieden wird.

13. Verfahren nach Anspruch 11 oder 12, **dadurch gekennzeichnet, dass** die Oberfläche eines Dehnmessstreifens und gegebenenfalls des Verformungskörpers (21) und/oder der ausebnenden Schicht (3) vor der Beschichtung mittels chemischer oder physikalischer Reinigungsverfahren, insbesondere mittels Plasmareinigungsverfahren, vorbehandelt wird.

## Claims

1. Strain gauge (1) with a strain-sensitive electrical resistor track (4) arranged on a carrier substrate (5) and with connector electrodes (8) for contacting the resistor track (4), wherein the strain gauge (1) is provided with a protective coating (2) consisting of inorganic materials and covering at least part of the carrier substrate (5) and/or of the resistor track (4) and/or of the connector electrodes (8), **characterized in that** the build-up structure of the inorganic protective coating (2) is inhomogeneous over the range of the coating thickness, and that between the strain gauge (1) and the protective coating (2) there is a surface-smoothing layer (3) consisting of a polymer or of an inorganic-organic hybrid polymer which evens out rough surface portions of the area to be coated, wherein the layer thickness of the surface-smoothing layer (3) is at least equal to the thickness of the protective coating, wherein the protective coating is configured as a multilayered coating (2) which in alternating sequence comprises different inorganic materials, and/or which in alternating sequence comprises different stoichiometric compositions of an inorganic material consisting of at least two components, and/or which in alternating sequence comprises variations in structural parameters of an inorganic material.

2. Strain gauge according to claim 1, **characterized in that** the protective coating (2) is arranged as a conformal coating on the surface-smoothing layer (3).

3. Strain gauge according to claim 1 or 2, **characterized in that** the protective coating comprises a sequence of silicon nitride layers and further layers of oxides, carbides or fluorides, or mixtures thereof.

4. Strain gauge according to claim 3, **characterized in that** the further layers consist of titanium oxide, tantalum oxide, zirconium oxide, hafnium oxide, aluminum oxide, silicon carbide, or titanium fluoride, in particular however of silicon oxide.

5. Strain gauge according to one of the claims 1 to 4, **characterized in that** the protective coating (2) which is configured as a multilayered coating comprises continuous transitions between the layers.

6. Strain gauge according to one of the claims 1 to 5, **characterized in that** the surface-smoothing layer (3) consists of an acrylate polymer.

7. Strain gauge according to one of the claims 1 to 6, **characterized in that** a cover layer of silicone or of a polymer material covers the inorganic protective coating (2).

8. Single-row array or two-dimensional array (30, 35) of strain gauges (1) according to one of the claims 1 to 7, **characterized in that** the carrier substrate (31, 36) of the single-row array or two-dimensional array (30, 35) is perforated by an arrangement of slits which allow that the lateral edge surfaces of the carrier substrate (31, 36) in the areas of the slits will likewise be covered by the surface-smoothing layer (3) and the protective coating (2).

9. Single-row array or two-dimensional array according to claim 8, **characterized in that** the arrangement of slits consists of slits (32, 34) that extend along the sides of a strain gauge (1), wherein each of the slits (32, 34) extends over nearly the entire length of a side of a strain gauge (1).

10. Force-measuring cell with a deformable body and with at least one strain gauge (1) according to one of the claims 1 to 7 installed on the deformable body, **characterized in that** a part of the protective coating (2) and of the surface-smoothing layer (3) underlying the protective coating extend beyond the at least one strain gauge (1) and cover at least a part of the deformable body (21), in particular the surface portions of the deformable body (21) that border on the strain gauge (1).

11. Method of producing a protective coating on an individual strain gauge (1) or on a single-row array or two-dimensional array (30, 35) of strain gauges (1) according to one of the claims 1 to 10, **characterized in that** a surface-smoothing polymer layer (3) consisting of a polymer or of an inorganic-organic hybrid polymer is deposited on at least a part of the carrier substrate (5, 31, 36) and/or of the resistor track (4) and/or of the connector electrodes (8), and that a thin inorganic protective coating (2) is deposited on the surface-smoothing layer (3), wherein the deposition process parameters are varied in such a way that an inorganic protective coating (2) is formed which is inhomogeneous over the coating thickness, comprising in alternating sequence different inorganic materials, and/or comprising in alternating sequence different stoichiometric compositions of an inorganic material consisting of at least two components, and/or comprising in alternating sequence variations in structural parameters of an inorganic material.

12. Method of producing a protective coating on a strain gauge (1) according to claim 11, **characterized in that** the strain gauge, prior to being provided with the coating, is installed on the deformable body (21) of a force measuring cell, and that the surface-smoothing layer (3) is applied to at least a part of the carrier substrate (5) and/or of the resistor track (4) and/or of the connector electrodes (8) and to the deformable body (21), and that the inorganic protective layer (2) is deposited on the surface-smoothing layer (3).

13. Method according to claim 11 or 12, **characterized in that** the surface of a strain gauge (1) and - if necessary - of the deformable body (21) and/or of the surface-smoothing polymer layer (3) is pretreated prior to the deposition process by means of chemical or physical cleaning methods, in particular by means of plasma-cleaning methods.

## Revendications

1. Jauge de contrainte (1) comprenant une bande de résistance (4) électrique sensible à l'étirement et appliquée sur un support (5) et des électrodes de raccordement (8) pour la mise en contact avec la bande de résistance (4), la jauge de contrainte (1) étant dotée d'une couche de protection (2) à base de matériaux inorganiques et recouvrant au moins une partie du support (5) et/ou de la bande de résistance (4) et/ou des électrodes de raccordement (8), **caractérisé en ce que** la couche de protection (2) inorganique est inhomogène dans sa structure sur son épaisseur et **en ce que** entre la jauge de contrainte (1) et la couche de protection (2) est présente une couche de nivellement (3), qui est à base d'un polymère ou d'un polymère hybride inorganique-organique, laquelle couche lisse la surface de la zone à recouvrir en ce qui concerne les aspérités, son épaisseur de couche correspondant au moins à l'épaisseur de la couche de protection, la couche de protection étant structurée sous la forme d'une couche à plusieurs strates (2), qui présente différents matériaux inorganiques dans une succession alternative, et/ou présente dans une succession alternative différentes compositions stoechiométriques d'un matériau inorganique à base d'au moins deux composants, et/ou qui présente dans une succession alternative différents paramètres structurels d'un matériau inorganique.

2. Jauge de contrainte selon la revendication 1, **caractérisé en ce que** la couche de protection (2) est disposée de façon conformale sur la couche de nivellement (3).

3. Jauge de contrainte selon la revendication 1 ou 2, **caractérisé en ce que** la couche de protection présente une succession de strates de nitrure de silicium et d'autres strates à base d'oxydes, carbures ou fluorures ou mélanges de ces produits.

4. Jauge de contrainte selon la revendication 3, **caractérisé en ce que** les autres strates sont à base d'oxyde de titane, d'oxyde de tantale, d'oxyde de zirconium, d'oxyde d'hafnium, d'oxyde d'aluminium, de carbure de silicium ou de fluorure de titane, mais en particulier à base d'oxyde de silicium.

5. Jauge de contrainte selon l'une quelconque des revendications 1 à 4, **caractérisé en ce que** la couche de protection (2) conçue comme couche à plusieurs strates présente des transitions continues entre les strates.

6. Jauge de contrainte selon l'une quelconque des revendications 1 à 5, **caractérisé en ce que** la couche (3) de nivellement est à base d'un polymère d'acrylate.

7. Jauge de contrainte selon l'une quelconque des revendications 1 à 6, **caractérisé en ce qu'**une couche de recouvrement à base de silicone ou de matériau polymère recouvre la couche de protection (2) inorganique.

8. Agencement de rangée ou de surface (30, 35) de jauges de contrainte (1) selon l'une quelconque des revendications 1 à 7, **caractérisé en ce que** le support (31, 36) de l'agencement de rangée ou de surface (30, 35) est traversé par un agencement de fente, les faces latérales du support (31, 36) étant recouvertes également par la couche (3) de nivellement et la couche de protection (2) dans la zone des fentes.

9. Agencement de rangée ou de surface selon la revendication 8, **caractérisé en ce que** l'agencement de fente est constitué de fentes (32, 34) le long des côtés d'une jauge de contrainte (1), chaque fente (32, 34) s'étendant sur pratiquement l'ensemble de la longueur latérale correspondante d'une jauge de contrainte (1).

10. Capteur de force comprenant un corps de déformation et au moins une jauge de contrainte (1) appliqué sur le corps de déformation selon l'une quelconque des revendications 1 à 7, **caractérisé en ce qu'**une partie de la couche de protection (2) et de la couche de nivellement (3) placée au-dessous de la première couche s'étendent au-delà du au moins une jauge de contrainte (1) et recouvrent au moins une partie du corps de déformation (21), en particulier les zones, contiguës à la jauge de contrainte (1), du corps de déformation (21).

11. Procédé pour générer une couche de protection sur une jauge de contrainte (1) individuel, ou un agencement de rangée ou de surface (30, 35) de jauges de contrainte (1), selon l'une quelconque des revendications 1 à 10, **caractérisé en ce qu'**une couche de nivellement (3), qui est à base d'un polymère ou d'un polymère hybride inorganique-organique, est appliquée sur au moins une partie du support (5, 31, 36) et/ou de la bande de résistance (4) et/ou des électrodes de raccordement (8), une couche de protection (2) inorganique est précipitée sur la couche de nivellement (3), les paramètres de revêtement étant modifiés de telle sorte qu'une couche de protection (2) inorganique et inhomogène sur son épaisseur se forme avec différents matériaux inorganiques dans une succession alternative et/ou avec différentes compositions stoechiométriques d'un matériau inorganique constitué d'au moins deux composants dans une succession alternative et/ou avec des paramètres structurels variables d'un matériau inorganique dans une succession alternative.

12. Procédé pour générer une couche de protection sur une jauge de contrainte selon la revendication 11, **caractérisé en ce que** la jauge de contrainte est appliquée avant son revêtement sur le corps de déformation (21) d'un capteur de force et **en ce que** la couche de nivellement (3) est appliquée sur au moins une partie du support (5) et/ou de la bande de résistance (4) et/ou des électrodes de raccordement (8) et le corps de déformation (21) et la couche de protection (2) inorganique est appliquée sur la couche de nivellement (3).

13. Procédé selon la revendication 11 ou 12, **caractérisé en ce que** la surface d'une jauge de contrainte et éventuellement du corps de déformation (21) et/ou de la couche de nivellement (3) est prétraitée avant le revêtement au moyen de procédés de nettoyage chimiques ou physiques, en particulier au moyen de procédés de nettoyage par plasma.
